# EUROPÄISCHE PATENTSCHRIFT

(11) **EP 0 985 594 B1**
(45) Veröffentlichungstag und Bekanntmachung des Hinweises auf die Patenterteilung: **06.10.2004**
(21) Anmeldenummer: 99115806.4
(22) Anmeldetag: 11.08.1999
(51) Int. Cl.: B62D 25/08

(54) **Heckstruktur einer selbsttragenden Kraftfahrzeugkarosserie und Verfahren zu ihrer Herstellung**
Rear partial structure of monocoque vehicle body construction and its method of production
Structure de la partie arrière d'une carrosserie autoportante de véhicule automobile et son procédé de production

(30) Priorität: 09.09.1998 DE 19841100
(43) Veröffentlichungstag der Anmeldung: 15.03.2000
(73) Patentinhaber: DaimlerChrysler AG, 70567 Stuttgart (DE)
(72) Erfinder: Brodt, Martin, 71272 Renningen (DE); Nowak, Rudolf, 71034 Böblingen (DE); Zimmermann, Jörg, 71691 Freiberg (DE)

(56) Entgegenhaltungen:
- DE-A- 19 618 258
- DE-B- 1 129 387

## Beschreibung

Die Erfindung betrifft eine Heckstruktur einer selbsttragenden Kraftfahrzeugkarosserie nach dem Oberbegriff des Patentanspruchs 1 und ein Verfahren zur Herstellung einer Heckstruktur einer selbsttragenden Kraftfahrzeugkarosserie nach dem Oberbegriff des Patentanspruchs 5.

Aus der DE 1 129 387 A ist bereits eine Heckstruktur einer selbsttragenden Karosserie eines Kraftwagens als bekannt zu entnehmen, welche zwei hintere Seitenwandabschnitte umfasst. Unterhalb eines Heckscheibenausschnittes erstreckt sich zwischen den beiden Seitenwandabschnitten eine diese miteinander verbindende Querwand, die etwa waagerecht verläuft und als Hutablage dient. Die Querwand umfasst dabei an ihrem vorderen und hinteren Ende zwei voneinander beabstandete Querträger, welche sich in Fahrzeugquerrichtung erstrecken und zwischen denen ein flächiges Bauteil in Form eines Abdeckbleches erstreckt.

Weiter ist aus der FR 2 055 636 ein Bodenbereich für ein Kraftfahrzeug mit Heckmotor bekannt, bei dem exakt zwischen zwei Längsträgern positioniert zwei Querträger angeordnet sind, und auf die eine flächige Bodenstruktur passgenau aufgesetzt ist. Dadurch ergibt sich ein Tragrahmen für den Kraftfahrzeugmotor und eine selbsttragende Kraftfahrzeugkarosserie, wobei jedoch keine Mittel zur Justierung der Bauteil gegeneinander offenbart sind.

Die DE 196 18 258 A1 offenbart einen Kraftfahrzeugrahmen, der aus mehreren Trägern aus Strangpressprofilen zusammengesetzt ist. Die Träger weisen ebenflächige Anlagebereiche auf, die einen Toleranzausgleich in Längs- und Querrichtung des Fahrzeugs gewährleisten.

Die DE 44 31 970 A1 offenbart eine Kraftfahrzeugkarosserie, bei der an ein Bodenblech auf gegenüberliegenden Seiten jeweils ein Karosserieblech angeschweißt ist, das ein Radhaus bildet. Das Bodenblech weist hierzu an seinen gegenüberliegenden Seiten entsprechende Anschweißflansche auf, die mittels jeweils einer Sicke an das Bodenblech angeschlossen sind. Diese Sicke ermöglicht eine Deformation des Bodenbleches quer zur Ebene des jeweiligen Anschweißflansches.

Aus der DE 37 18 841 A1 ist eine Rahmenanordnung für ein Kraftfahrzeug bekannt, bei der Stellmittel vorgesehen sind, mittels derer die Längsträger der Rahmenanordnung einzeln oder gemeinsam um eine quer zu ihrer Längserstreckung gerichtete Achse schwenkbar sind. Dadurch können Toleranzen ausgeglichen werden, die hinsichtlich der symmetrischen Anordnung beider Längsträger beim Montieren von Aufbauteilen, wie Kotflügeln, Scheinwerfern, Stoßfängern und ähnlichem, auftreten können.

Aufgabe der Erfindung ist es, eine Heckstruktur der eingangs genannten Art und ein Verfahren zu ihrer Herstellung zu schaffen, bei der mit möglichst einfachen Mitteln ein spannungsfreies Fügen der Querwand zwischen die Seitenwandabschnitte ermöglicht ist.

Diese Aufgabe wird erfindungsgemäß mit den Merkmalen des Anspruches 1 oder 5 gelöst. Das flächige Bauteil stellt insbesondere ein Interieurteil des Fahrzeuginnenraumes dar, in dem Lautsprecheraufnahmen oder andere Zusatzfunktionen integriert sind. Bei der Heckstruktur nach Anspruch 1 ist der erste Querträger angrenzend an den Heckscheibenausschnitt zwischen die Seitenwandabschnitte eingepaßt. Über diesen Querträger wird zunächst eine exakte Positionierung der Seitenwandabschnitte gegeneinander an einer Stelle ermöglicht, an der eine Fahrzeugheckscheibe vorgesehen ist.

Darüber hinaus ist vorgesehen, den zweiten Querträger über beidseitig jeweils eine Lagerung justierbar zwischen den Seitenwandabschnitten anzuordnen. Dadurch wird ein Ausgleich von Fertigungstoleranzen ermöglicht, so daß die Anordnung aus Seitenwandabschnitten und Querträgern spannungsfrei und symmetrisch ausgerichtet und sodann fixiert werden kann. Das flächige Bauteil läßt sich ebenfalls spannungsfrei an die positionierten Querträger anbringen. Durch das erfindungsgemäße Verfahren nach Anspruch 5 läßt sich die Montage der Heckstruktur an vorhandene Fertigungstoleranzen spannungsfrei anpassen, wobei gleichzeitig eine exakte Ausrichtung des Heckscheibenausschnittes gewährleistet ist.

Durch eine vorteilhafte Weiterbildung der Erfindung gemäß Anspruch 2 wird zusammen mit der Ausrichtung der Seitenwandabschnitte eine Festlegung des Heckscheibenausschnittes einschließlich der Auflage für die Heckscheibe erreicht, so daß an dieser Stelle geringe Fertigungstoleranzen sichergestellt sind.

Durch die Ausgestaltung nach Anspruch 3 lassen sich Verriegelungsmittel, insbesondere Rastschlösser zur Festlegung einer umklappbaren Fondsitzbanklehne an dem zweiten Querträger vorsehen und vorteilhafterweise gemeinsam mit diesem ausrichten.

Gemäß Anspruch 4 läßt sich das flächige Bauteil in seiner Funktion und damit auch in seiner Masse bzw. seinen Stabilitätseigenschaften stark einschränken, so daß sich Kosten und Fahrzeuggewicht reduzieren lassen.

In Weiterbildung des erfindungsgemäßen Verfahrens nach Anspruch 6 wird das flächige Bauteil an die positionierten Querträger angebracht, wobei durch geeignete Ausgestaltung des flächigen Bauteils Lagetoleranzen der Querträger ohne weiteres ausgeglichen werden können.

Weitere Vorteile und Merkmale der Erfindung ergeben sich aus den Unteransprüchen. Nachfolgend ist ein bevorzugtes Ausführungsbeispiel der Erfindung beschrieben und anhand der Zeichnungen dargestellt.
- Fig. 1: zeigt in einer Explosionsdarstellung den fahrerseitigen Teil einer erfindungsgemäßen Heckstruktur,

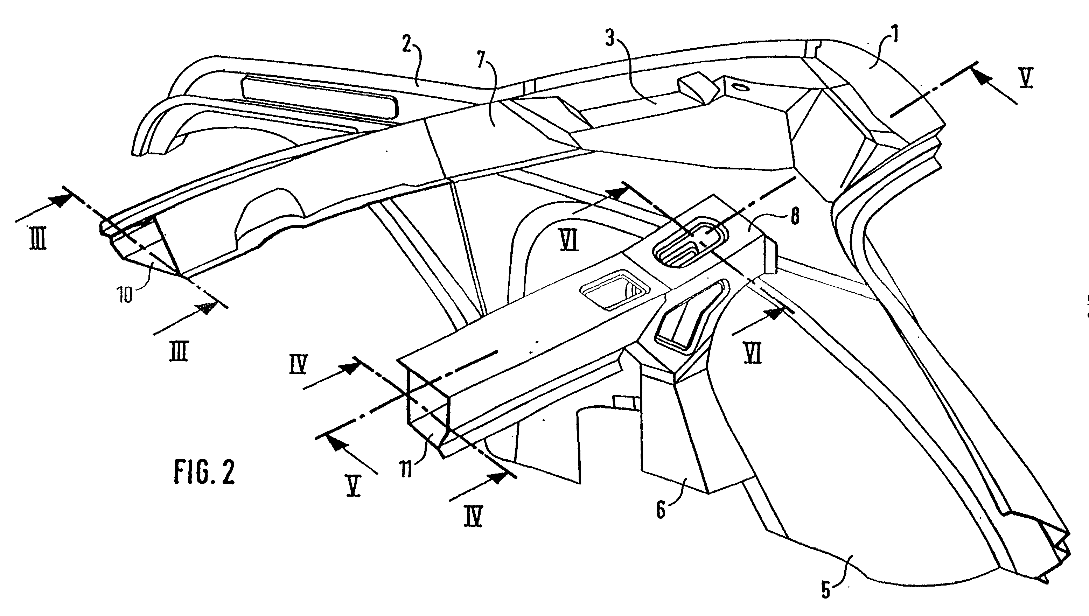

- Fig. 2: eine Zusammenbauzeichnung dieses Teils der Heckstruktur nach Fig. 1,
- Fig. 3: einen Querschnitt durch einen ersten Querträger entlang der Schnittlinie III-III in Fig. 2,
- Fig. 4: einen Querschnitt durch einen zweiten Querträger entlang der Schnittlinie IV-IV in Fig. 2,
- Fig. 5: einen Querschnitt durch einen Teil der Heckstruktur entlang der Schnittlinie V-V in Fig. 2 und
- Fig. 6: einen Querschnitt durch eine als Lagerung dienende Konsole des zweiten Querträgers entlang der Schnittlinie VI-VI in Fig. 2.

In den Figuren ist eine erfindungsgemäße Heckstruktur eines Personenkraftwagens dargestellt, die auf der in Fahrtrichtung gesehen linken Seite angeordnet ist. Ein spiegelbildlich bezüglich der Fahrzeuglängsachse ausgeführter Teil der Heckstruktur ist auf der in Fahrrichtung gesehen rechten Seite des Personenkraftwagens angeordnet, jedoch nicht in den Zeichnungen dargestellt. Die folgenden Erläuterungen beziehen sich demzufolge auf den dargestellten linken Teil der Heckstruktur, sind jedoch für den anderen Teil in gleicher Weise gültig.

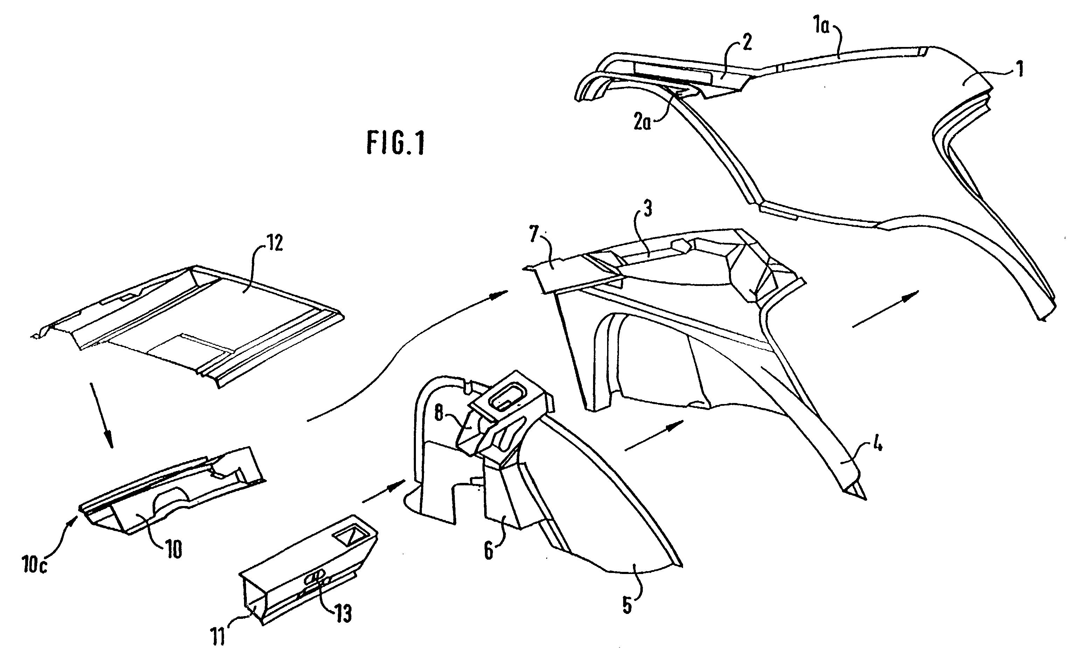

Wie in Fig. 1 dargestellt, weist die Heckstruktur einen aus mehreren Teilen bestehenden Seitenwandabschnitt 1 bis 5 auf. Im einzelnen sind diese Bestandteile eine Außenbeplankung 1 mit einem davon abragenden Anschweißteil 2, einer Innenwand 3 der C-Säule, einem Außenteil 4 des Radeinbaus sowie einem Innenteil 5 des Radeinbaus. Die genannten Bauteile sind in herkömmlicher Weise zu einem Seitenwandabschnitt zusammenzufügen, der darüber hinaus mit weiteren Seitenwandabschnitten zu einer kompletten Fahrzeugseitenwand zusammengefaßt werden kann.

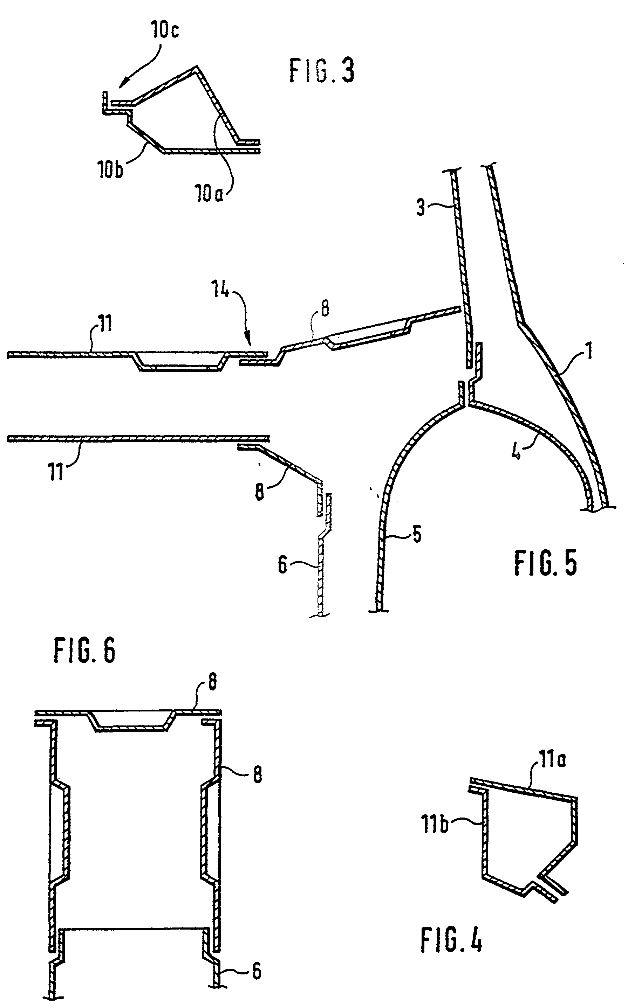

Im Bereich des Heckscheibenausschnittes des Fahrzeuges ist an die Innenwand 3 der C-Säule ein Zwischenstück 7 nach innen abragend angefügt. Ferner ist an der Innenseite des Innenteils 5 des Radeinbaus eine in Richtung der Fahrzeughochachse ausgerichtete Verstärkung 6 angeordnet, die an ihrer Oberseite direkt in eine Konsole 8 übergeht. Die Konsole 8 ist dabei an ihrer nach außen orientierten Seite sowohl mit dem Innenteil 5 des Radeinbaus als auch mit der Innenwand 3 der C-Säule verbunden. Dies ist insbesondere aus der Schnittdarstellung in Fig. 5 ersichtlich. Die Konsole 8 bildet somit einen oberen Abschluß für die Verstärkung 6, die im Bereich des Radeinbaus bzw. der Fahrzeughinterachse für eine besondere Versteifung der Fahrzeugkarosserie sorgt.

Zwischen dem dargestellten linksseitigen Seitenwandabschnitt und dem gegenüberliegenden rechten Seitenwandabschnitt ist eine als Hutablage und Karosseriequerverstrebung dienende Querwand 10, 11, 12 eingepaßt, die sich aus den Bestandteilen Heckmittelstück 10, vorderer Querträger 11 und Verkleidung 12 zusammensetzt.

Das als erster Querträger dienende Heckmittelstück 10 ist aus zwei Blechprofilen 10a und 10b zusammengesetzt und weist einen aus Fig. 3 entnehmbaren Querschnitt auf. Das Heckmittelstück 10 ist einerseits über das Zwischenstück 7, an das er in Fahrzeugquerrichtung weitgehend paßgenau anzusetzen ist, mit der Innenwand 3 der C-Säule verbunden. Andererseits schließt er mit einem Flansch 10c an das Anschweißteil 2 an.

Der zweite, vordere Querträger 11, der, wie aus Fig. 4 ersichtlich, ebenfalls aus zwei Blechprofilen aufgebaut ist, ist in Fahrzeugquerrichtung linear verschiebbar in die Konsole 8 eingesetzt. Aus Fig. 5 ist dazu entnehmbar, daß der vordere Querträger 11 an der Stelle 14 ein gewisses Montagespiel gegenüber der Konsole 8 und damit auch gegenüber dem Seitenwandabschnitt 1 - 5 aufweist. Dieses Montagespiel dient dazu, den vorderen Querträger 11 in Fahrzeugquerrichtung zu justieren. In einem modifizierten Ausführungsbeispiel ist darüber hinaus eine Justierbarkeit des vorderen Querträgers 11 auch in Richtung der Fahrzeughochachse vorsehbar. Zum anderen ist die vorgeschlagene Führung des vorderen Querträgers 11 in der Konsole 8 ebenfalls geeignet, geringe Schwenkbewegungen zur Justierung der Seitenwandabschnitte gegeneinander und gegenüber dem Querträger 11 zuzulassen, wobei die Kontaktstelle zwischen dem Heckmittelstück 10 und dem Anschweißteil 2 und/oder die Kontaktstelle zwischen Heckmittelstück 10 und dem Zwischenstück 7 jeweils als Bezugspunkt vorsehbar sind, da der Flansch 10c als Auflageteil für die Kraftfahrzeugheckscheibe ohne wesentliche Toleranzen an den Seitenwandabschnitten und dem Fahrzeugdach fortgeführt werden muß.

Der vordere Querträger 11 bildet die Aufnahme für nicht dargestellte Kopfstützen und Rastschlösser 13, die als Verriegelungsmittel zur Festlegung einer umklappbaren Fondsitzbanklehne an dem vorderen Querträger 11 dienen, der ferner auch einen Anschlag für die Fondsitzbanklehne bildet. Die vorgesehene Justierbarkeit des vorderen Querträgers 11 ist somit nutzbar, um die Position des Querträgers selbst und insbesondere auch die der Rastschlösser 13 auf die Einbausituation der Fondsitzbank auszurichten.

Die als flächiges Bauteil konzipierte Verkleidung 12 ist auf das Heckmittelstück 10 und den vorderen Querträger 11 aufsetzbar, wobei sie eine ausreichende Einbautoleranz gegenüber den Seitenwandabschnitten aufweist. Somit ist auch die Verkleidung 12 in Fahrzeugquerrichtung justierbar, so daß sich ein vollständig spannungsfrei zwischen die Seitenwandabschnitte des Fahrzeuges einfügbares System aus den beiden Querträgern 10, 11 und der Verkleidung ergibt. Die Verkleidung übernimmt dabei im Hinblick auf die Karosserieverstrebung nur noch eine untergeordnete Funktion, sie dient nunmehr lediglich als Kofferraumabdeckung, Lautsprecheraufnahme und Hutablage.

In einem modifizierten Ausführungsbeispiel ist vorgesehen, das Heckmittelstück derart auszuführen, daß es das Anschweißteil 2 und das Zwischenstück 7 so weit überlappt, daß wie bei dem vorderen Querträger 11 ein Montagespiel in Fahrzeugquerrichtung erreicht wird.

Bei einem Verfahren zur Herstellung der dargestellten Heckstruktur einer selbsttragenden Kraftfahrzeugkarosserie werden zunächst in einem gesonderten Fertigungsvorgang die Außenbeplankung 1, das Anschweißteil 2, die Innenwand 3 der C-Säule, das Außenteil 4 des Radeinbaus und das Innenteil 5 des Radeinbaus sukzessive zu einem Seitenwandabschnitt zusammengefügt. Dazu können die genannten Bauteile in vorgeschalteten Herstellungsabschnitten aus Einzelteilen aufgebaut oder untereinander zu Baugruppen zusammengefaßt werden. In einem anschließenden Herstellungsabschnitt werden das Zwischenstück 7, die Verstärkung 6 und die Konsole 8 an den vormontierten Seitenwandabschnitt angefügt. Wie bereits vorher erwähnt, ergibt sich aus der Spiegelsymmetrie der Heckstruktur bezüglich der Fahrzeuglängsachse, daß ein derartiger Verfahrensablauf sowohl für einen rechten als auch für einen linken Seitenwandabschnitt vorzusehen ist.

Zwischen die wie geschildert aufgebauten Seitenwandabschnitte werden in einem ersten Verfahrensschritt des erfindungsgemäßen Verfahrens das Heckmittelstück 10 über das Zwischenstück 7 und der vordere Querträger 11 über die Konsole 8 zwischen die Seitenwandabschnitte eingesetzt. Dabei wird das Heckmittelstück 10 weitgehend formschlüssig an dem Zwischenstück 7 und dem Anschweißteil 2 festgelegt, während der obere Querträger begrenzt in Fahrzeugquerrichtung verschieblich in die Konsole 8 eingesteckt und mittig zwischen den beiden Seitenwandabschnitten ausgerichtet wird. Dabei wird die Anordnung im Hinblick auf eine exakte Positionierung der Baugruppen ausgerichtet, woraufhin zunächst das Heckmittelstück und dann der obere Querträger fixiert, d.h. insbesondere eingeschweißt, werden. In einem nachfolgenden Verfahrensschritt wird die als flächiges Bauteil gestaltete Verkleidung 12 auf das Heckmittelstück 10 und den vorderen Querträger 11 aufgesetzt.

Das vorgeschlagene Verfahren zur Herstellung einer Heckstruktur läßt bei den meisten Bauteilen eine erhöhte Fertigungstoleranz zu und ermöglicht dennoch ein spannungsfreies Fügen der die Seitenwandabschnitte der Heckstruktur miteinander verbindenden Querwand. Eine bei herkömmlichen Verfahren vorhandene Überbestimmtheit der Bauteile beim Aufbau einer gattungsgemäßen Heckstruktur entfällt, wodurch sich zusätzlicher gestalterischer Freiraum bei der Konzeption des Auflageflansches für die Heckscheibe und der Rastschlösser der Fondsitzbanklehne ergibt.

## Patentansprüche

1. Heckstruktur einer selbsttragenden Kraftfahrzeugkarosserie mit zwei Seitenwandabschnitten (1 bis 5), zwischen denen unterhalb eines Heckscheibenausschnittes eine die Seitenwandabschnitte (1 bis 5) miteinander verbindende und als Hutablage dienende Querwand (10,11,12) angeordnet ist, die zwei zueinander beabstandete Querträger (10,11) aufweist, zwischen denen sich ein flächiges Bauteil (12) erstreckt,
**dadurch gekennzeichnet,**
**dass** der erste Querträger (10) angrenzend an den Heckscheibenausschnitt spielfrei zwischen die Seitenwandabschnitte (1 bis 5) eingepasst ist, und dass für den zweiten Querträger (11) beidseitig jeweils eine Lagerung (8) vorgesehen ist, die eine mindestens in Fahrzeugquerrichtung erstreckte Justierbarkeit des zweiten Querträgers (11) zwischen den Seitenwandabschnitten (1 bis 5) gewährleisten, und dass das flächige Bauteil (12) ausschließlich mit den beiden Querträgern (10,11) verbunden ist.

2. Heckstruktur nach Anspruch 1,
**dadurch gekennzeichnet,**
**dass** der erste Querträger (10) einen Flansch (10c) als Auflageteil für eine Kraftfahrzeugheckscheibe aufweist, der mit Flanschen (2a,1a) in den Seitenwandabschnitten (1 bis 5) korrespondiert.

3. Heckstruktur nach einem der Ansprüche 1 oder 2,
**dadurch gekennzeichnet,**
**dass** der zweite Querträger (11) Verriegelungsmittel (13) zur Festlegung einer umklappbaren Fondsitzbanklehne an dem Querträger (11) aufweist.

4. Heckstruktur nach wenigstens einem der Ansprüche 1 bis 3,
**dadurch gekennzeichnet,**
**dass** das flächige Bauteil (12) als nicht-tragendes Verkleidungsteil ausgeführt ist.

5. Verfahren zur Herstellung einer Heckstruktur einer selbsttragenden Kraftfahrzeugkarosserie, insbesondere nach wenigstens einem der Ansprüche 1 bis 4, mit zwei Seitenwandabschnitten (1 bis 5), zwischen denen unterhalb eines Heckscheibenausschnittes eine die Seitenwandabschnitte (1 bis 5) miteinander verbindende und als Hutablage dienende Querwand (10,11,12) angeordnet wird, die aus zwei zueinander beabstandet angeordneten Querträgern (10,11) und einem sich zwischen den Querträgern (10,11) erstreckenden flächigen Bauteil (12) zusammengesetzt wird,
**dadurch gekennzeichnet,**
**dass** der erste Querträger (10) spielfrei und der zweite Querträger (11) wenigstens in Fahrzeugquerrichtung mit Spiel zwischen die Seitenwandabschnitte (1 bis 5) eingesetzt werden, dass der zweite Querträger (11) mittig zu den Seitenwandabschnitten (1 bis 5) ausgerichtet wird, und dass anschließend beide Querträger (10,11) an den Seitenwandabschnitten (1 bis 5) festgelegt werden.

6. Verfahren nach Anspruch 5,
**dadurch gekennzeichnet,**
**dass** das flächige Bauteil (12) an die festgelegten Querträger (10, 11) angefügt wird.

## Claims

1. A rear structure of a unitised body of a motor vehicle having two side panel sections (1 to 5) between which is positioned beneath a rear window cut-out a cross panel (10 11, 12) which connects the side panel sections (1 to 5) together and serves as a rear shelf and which has two crossmembers (10, 11) which are spaced a certain distance apart and between which extends a flat component,
**characterised in that**
the first crossmember (10) is fitted between the side panels (1 to 5) without play adjacent to the rear window cut-out, bearings (8) which guarantee a degree of adjustability of the second crossmember (11) at least across the body of the vehicle between the side panels (1 to 5) are provided on either side of the second crossmember (11) and the flat component (12) is connected only to the two crossmembers (10, 11).

2. A rear structure in accordance with claim 1,
**characterised in that**
the first crossmember (10) has a flange (10c) as a base for a rear window of a motor vehicle which corresponds to flanges (2a, 1a) in the side panels (1 to 5).

3. A rear structure in accordance with one of claims 1 or 2,
**characterised in that**
the second crossmember (11) has locking means (13) to secure a folding rear seat back to the crossmember (11).

4. A rear structure in accordance with at least one of claims 1 to 3,
**characterised in that**
the flat component (12) is designed as a non load-bearing trim part.

5. A process for the production of a rear structure of a unitised body of a motor vehicle, in particular in accordance with at least one of claims 1 to 4, having two side panel sections (1 to 5) between which is positioned beneath a rear window cut-out a cross panel (10 11, 12) which connects the side panel sections (1 to 5) together and serves as a rear shelf and which comprises two crossmembers (10, 11) spaced a certain distance apart and a flat component (12) which extends between the crossmembers (10, 11),
**characterised in that**
the first crossmember (10) is fitted without play and the second crossmember (11) is fitted with play at least across the body of the vehicle between the side panels (1 to 5), the second crossmember (11) is oriented centrally in relation to the side panels (1 to 5) and both crossmembers (10, 11) are then fixed to the side panel sections (1 to 5).

6. A process in accordance with claim 5,
**characterised in that**
the flat component (12) is attached to the fixed crossmembers (10, 11).

## Revendications

1. Structure de la partie arrière d'une carrosserie de véhicule autoportante dotée de deux sections de paroi latérale (1 à 5), entre lesquelles une paroi transversale (10, 11, 12),comportant deux supports transversaux (10, 11) distants l'un de l'autre entre lesquels s'étend un élément plat (12), servant de tablette arrière et reliant les sections de paroi latérale (1 à 5) les unes aux autres est disposée en dessous d'une partie de la lunette arrière, **caractérisée en ce que** le premier support transversal (10) adjacent à la partie de la lunette arrière est adapté sans jeu entre les sections de paroi latérale (1 à 5) et **en ce que** pour le second support transversal (11) un logement (8) garantissant une possibilité de réglage du second support transversal (11) entre les sections de paroi latérale (1 à 5) s'étendant au moins dans le sens transversal du véhicule, est prévu de chaque côté, et **en ce que** l'élément plat (12) est relié exclusivement aux deux supports transversaux (10, 11).

2. Structure de la partie arrière selon la revendication 1, **caractérisée en ce que** le premier support transversal (10) comporte une bride (10c), correspondant aux brides (2a, 1a) des sections de paroi transversale (1 à 5) comme pièce d'appui pour une lunette arrière du véhicule.

3. Structure de la partie arrière selon la revendication 1 ou 2, **caractérisé en ce que** le second support transversal (11) comporte des moyens de verrouillage (13) pour la fixation d'un dossier de banquette arrière sur le support transversal (11).

4. Structure de la partie arrière selon l'une quelconque des revendications 1 à 3, **caractérisée en ce que** l'élément plat (12) est conçu comme une pièce de revêtement non portante.

5. Procédé de production d'une structure de la partie arrière d'une carrosserie de véhicule autoportante, en particulier selon l'une quelconque des revendications 1 à 4, dotée de deux sections de paroi latérale (1 à 5), entre lesquelles une paroi transversale (10, 11, 12), composée de deux supports transversaux (10, 11) distants l'un de l'autre et d'un élément plat (12) s'étendant entre les supports transversaux (10, 11), servant de tablette arrière et reliant les sections de paroi latérale (1 à 5) les unes aux autres est disposée en dessous d'une partie de la lunette arrière, **caractérisée en ce que** le premier support transversal (10) est inséré sans jeu et le second support transversal (11) inséré au moins dans le sens transversal du véhicule avec jeu entre les sections de paroi latérale (1 à 5), **en ce que** le second support transversal (11) est aligné sur le centre par rapport aux sections de paroi latérale (1 à 5) et **en ce que** seuls les deux supports transversaux (10, 11) sont fixés sur les sections de paroi latérale (1 à 5).

6. Procédé de production selon la revendication 5, **caractérisé en ce que** l'élément plat (12) est ajouté aux supports transversaux (10, 11) fixés.
